(19) Europäisches Patentamt

European Patent Office

Office européen des brevets

(11) **EP 1 096 389 A2**

(12) **EUROPEAN PATENT APPLICATION**

(43) Date of publication:
02.05.2001 Bulletin 2001/18

(51) Int. Cl.[7]: **G06F 15/18**

(21) Application number: **00119766.4**

(22) Date of filing: **11.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.10.1999 US 426955**

(71) Applicant:
**MITSUBISHI DENKI KABUSHIKI KAISHA Tokyo 100-8310 (JP)**

(72) Inventor: **Brand, Matthew Newton, Massachusetts, 02460 (US)**

(74) Representative:
**Pfenning, Meinig & Partner
Mozartstrasse 17
80336 München (DE)**

(54) **Stylistically variable state space models for dynamic systems**

(57) A method models a dynamic system operating in a plurality of styles. Training data are acquired of the system while the system is operating in a plurality of styles. A generic model of the system is determined based on all of the training data. A variation-specific model is determined for the training data of each of the plurality of styles of operating. Stylistic degrees of freedom, style coordinates, and a specialization function are determined from the generic model and the plurality of variation-specific models. The style coordinates, the styles degrees of freedom, and the specialization function are applied to the generic model to produce specialized models. Sampling from the specialized model generates data simulating the system operating in an arbitrary style.

FIG. 1

EP 1 096 389 A2

## Description

### Field of the Invention

The present invention relates generally to a method and apparatus for machine learning, and more particularly to modelling complex dynamic systems with state-space models.

### Background of the Invention

The goal of unsupervised machine learning is to produce robust parametric models that support inferences about complex and possibly dynamic systems. These inferences include prediction, classification, and simulation.

A learning process begins with observed signals or a set of training data acquired from the system to be modeled. The learning process then looks for patterns and properties common to all the data instances in the training set. These patterns are called the *essential structure* of the training data. The essential structure reflects the workings of the signal or data generating system. The essential structure forms the basis for forming a model of the system, and all inferences that can be made from the model.

There are four important impediments to learning models from signals or data.

First, all physical processes and means of measurement are plagued by noise. Noise contaminates the data and obscures the essential structure. Eliminating noise from a real world system is practically impossible.

Second, any finite training set is likely to be a small sample of all of the data that the system can possibly generate. Therefore, any training set is biased in the sense that the training set will lack some of the data-generating system's patterns. It will also have random coincidental patterns that are unrelated to the actual operation of the data-generating system. Noise and bias are the main constituents of what are called the *accidental properties* of the training data.

Third, the essential structure of the training data may be hidden. For example, the data-generating system might be a machine that calculates the digits of . , but only outputs ones and zeroes depending on whether a digit is odd or even. Fourth, the data may be so varied that it is extremely difficult to find any common patterns.

The first two problems related to the accidental properties of the data are the principal focus of statistics and probability, and have an extensive prior art.

The better a model fits the data, the more the model is misled by the accidental properties of the data, and therefore, the less useful the model is for prediction and generalization. This is called overfitting. Virtually all solutions to overfitting require that the model satisfies two competing constraints. The model must fit the data well and the model must be as simple as possible. This is the central dictum of science, where it is known as the *parsimony principle* or Occam's razor. The parsimony principle helps one identify and "cut away" those concepts, variables or constructs that are not really needed to model the system. By doing that, one reduces the likelihood of inconsistencies, ambiguities and redundancies in the model. The parsimony principle is essential for model building because of what is known as the underdetermination of theories by data. For a given set of training data, there is always an infinite number of possible models explaining the data. The parsimony principle helps one find the model in this set that is least misled by the data's accidental properties and most representative of its essential structure.

In learning, the parsimony principle is formalized as the minimum coding length principle. Simpler models can be coded concisely and well-fit models give concise codings of the data. This principle has many expressions including minimum description length (MDL), minimum message length (MML), and entropy (non-uniformity) minimization. Many other criteria can be shown to be asymptotically equivalent, including Bayesian posterior inference, stochastic complexity, and structural risk minimization. The main difference between these formulations is that they lead to practical methods of varying effectiveness, efficiency, and robustness.

The third problem is also pervasive because many interesting phenomena are at least partly hidden. In statistics, this is often called the problem of latent variables or causes. Many algorithms have been proposed for this solving this problem, but few satisfy the minimum coding length principle. This is important because introducing latent variables into the model vastly expands the risk of overfitting.

The fourth problem, excessive variation, often arises when the data contain sources of variation that are independent of the data-generating system. The amount of data needed for learning can grow exponentially with the number of sources. Typically, not enough data are available for straightforward learning. The prior art treats some special cases where the data are a linear combination of two or more independent processes, e.g., independent factor analysis, multi-linear models, and factorial models. Outside these special cases, the learning algorithms will fail.

Therefore, it is desired to provide a method and apparatus which deal with a particularly hard non-linear modeling case, namely, the case where the behavior of the data-generating system itself is modulated by an unpredictable independent process, so that the ouputs of the system are "random variations on a theme." In addition, the data have hidden structure necessitating latent variable models, and the data are, of course, biased and noisy.

In addition, it is desired to provide a method and apparatus that incorporates solution to the four problems stated above. The method needs to yield efficient processes for determining robust, adaptable models for complex dynamical systems, and the models should allows simulation of complex systems with high levels of detail.

## Summary of the Invention

It is one goal of the invention to extract a single parametric model from training data generated by a complex system. The model is to cover the generic behavior in an entire family of training data, and the generic model should allow specialization to model any number of individual stylistic variations, combination of styles, or extrapolation of styles. During a learning step, the simultaneous estimation of the generic model and a set of variation-specific models should be constrained so that the stylistic variations are close to the generic model in an information-theoretic sense. All of the models should also be constrained to maximize simplicity and generality. In addition, these two constraints should interact to produce a third desirable property. The stylistic models should be expressed as small variations on the generic model, and the domain of such variations should be captured with a small number of parameters.

A key insight of the present invention is that the essential structure of the data can be divided into the underlying model itself and stylistic variations in expressing the model. Given a modest training set of highly varied data, the invention recovers a simple generic model of the system plus a small number of stylistic degrees of freedom. The stylistic degrees of freedom allow small modifications of the generic model that generate the variations seen in the training data set. The invention allows the synthesis of new models from novel settings of the stylistic degrees of freedom, including novel combinations (interpolations) of the stylistic variations in the training set. In addition, extrapolations along stylistic degrees of freedom can plausible produce variations that are difficult to reproduce in the real world.

More specifically, the invention provides a method for modeling a dynamic system operating in a plurality of styles. Training data are acquired of the system while the system itself is operating in a variety of styles. A generic model of the system is determined based on all of the training data. A variation-specific model is determined for the training data of each of the observed variations of operating.

Stylistic degrees of freedom, style coordinates, and a specialization function are determined from the generic model and the plurality of variation models. The style coordinates, the styles degrees of freedom, and the specialization function are applied to the generic model to produce specialized models. State sequences applied to the specialized models allow the specialized model to generate data simulating arbitrary styles of operating the system.

## Brief Description of the Drawings

Figure 1 is a flow diagram of a method for learning a model of a complex dynamic system according to the invention;

Figure 2 is a flow diagram of an expectation-minimization step of the method of Figure 1; and

Figure 3 is a diagrammatic of a stylistic hidden Markov model according to the present invention.

## Detailed Description of the Preferred Embodiment

### System Overview

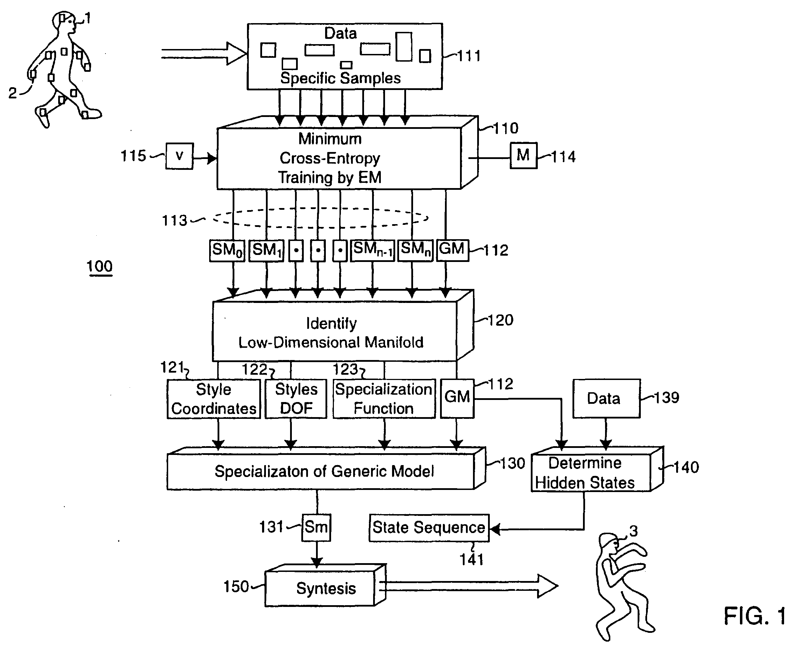

Figure 1 shows a general method 100 for learning models of complex dynamic systems, and using such models after the models become known. In the method according to the invention, the learning is fully unsupervised, and the number and nature of stylistic degrees of freedom of the models, typically fewer than the number of variations in the data, are determined automatically. In addition, the learned degrees of freedom lend themselves to intuitive operations that are very useful for synthesis, e.g., mixtures of styles, extrapolation of styles, completion of style analogies, and the like.

For the purpose of this description, the example dynamic system that will be used is a human being 1. More particularly, a person performing bipedal locomotion. It should be understood, that the present invention can model many other dynamic systems, biological, mechanical, chemical, electrical, physical, and so forth.

A first step 110 of learning begins with a "family" of training data 111. For the example system, the training data 111 consist of observations obtained from videos. The videos are sequences of images of persons performing a family of stylistic variations on the underlying generic bipedal locomotion, e.g., strolling, walking, running, skipping, hopping, staggering, dancing etc. The term family is used because all sample data stem from a common data generating mechanism, e.g., bipedal locomotion. Each sample or group of samples may instantiate a different variation of locomotion. The samples need not be aligned, e.g., the training samples may contain different dances in a tango style, a swing style, a ballroom a style, rumba style, and the like. It should be notes, that other physical systems may use measuring techniques other than imaging to acquire the training data. For example, training data can be acquired by motion capture, sonar, seismography, thermography, or any known technique for measuring signals or capturing systemic data.

As an optional preprocessing step, data of similar locomotions can be grouped. For example, all "dancing" like data can be put in one group, and all "running" like data in another group, although this is not essential for the operation of the invention.

For the purpose of representing, the person is equipped with markers 2 to help identify the motion of the limbs and torso in the videos. So in this particular dynamic system, the training data are the trajectories (x-y-z coordinates) of the markers over time.

## Cross-Entropy Training

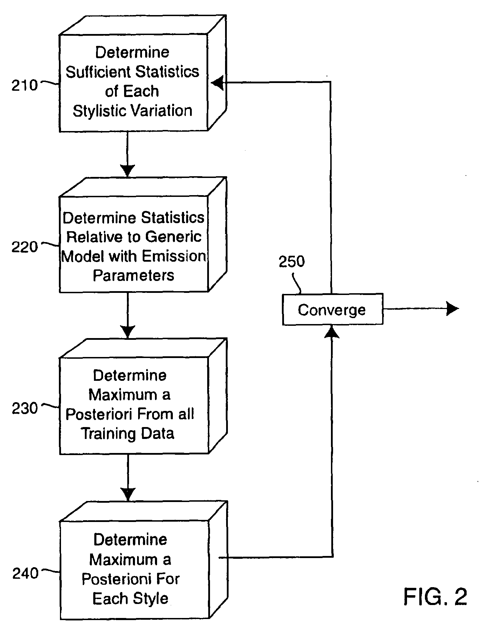

Step 110 performs minimum-cross entropy training using an expectation-minimization process described in greater detail below with reference to Figure 2. The minimum-cross entropy training separates the essential structures of the system model into a generic model (GM) 112 and variation-specific models ($SM_0$, ..., $SM_n$) 113. The generic model models all of the input data, and specific stylistic variations model each of the observed samples of bipedal locomotion. The generic model has a qualitative structure, and the different variation-specific models are variations in the mapping from the qualitative structure to quantitative expressions of the generic model. As an option, the generic model can be initialized in a preprocessing step.

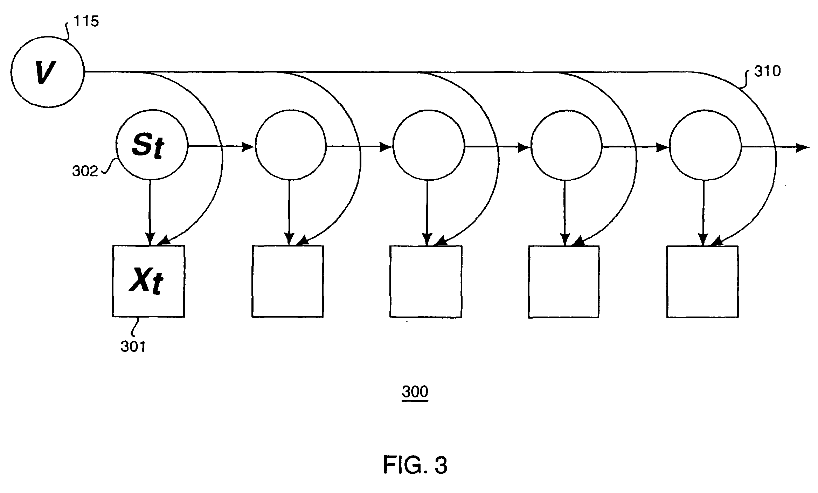

The generic model is separated from the variation-specific models and accidental properties of the data by minimizing entropies in a probabilistic model described in greater detail below with reference to Figure 3. The main advantage of separating variation-specific models from the generic model is that simpler models result in both cases.

The generic model has a nonlinear structure that is expressed with a hidden state-space model described in greater detail below. Styles are modeled as degrees of freedom in the mapping from the qualitative structure, i.e., the hidden states, to the quantitative measurement, i.e., the observed signal or training data. It is also possible to have stylistic degrees of freedom in the internal parameters of the model, i.e., in the dynamics between the hidden states.

In the notation of graphical models, the training 110 uses a model ($M$) 114 having hidden state variables and Gaussian probability distributions of the training data 111. A vector-valued style variable $v$ 115 is added. Changing the value of the variable $v$ is equivalent to varying the parameters of the generic model to produce variation-specific model 113. For example, much of the variation between walking, shuffling, strutting, etc. can be summed up in the mean pose and velocity at each phase of the dynamical cycle. Thus, it would make sense to break up the dynamical cycle into qualitatively significant hidden states, and map these to different body poses and velocities, depending on the style of locomotion. In fact, mean pose and velocity are just two of many parameters that can be varied stylistically. This can be called a stylistic hidden Markov model (SHMM).

When an SHMM is applied to the human locomotion data set, stylistic variations in the locomotion are factored out to reveal the particularly clean generic model 112 of the non-linear dynamics common to all bipedal locomotion. The SHMM is described in greater detail below with reference to Figure 3. Using the SHMM, a small number of style factors or coordinates can be determined to explain a large number of variations in the training set. By varying these coordinates, it becomes possible to generate new locomotion sequences exhibiting novel combinations of the style factors. Although the invention is described in terms of using HMMs, the present method is general and equally applies to a wide variety of models such as mixture models.

## Entropic Estimation

Minimizing entropy yields the simplest model that substantially expresses the essential structure of the training data, or, equivalently, the most complex model whose estimated parameters are fully supported by the training data 111. Entropic estimation instantiates the generic model 112 as a continuous formulation of the parsimony principle: minimize the expected coding length and maximize the fit. Entropic estimation provides a general framework for constructing maximum *a posteriori* (MAP) entropy-optimizing processes that recover the data-generating system, principally by extinguishing excess model parameters that are not well-supported by the training data.

The resulting models according to the invention strongly outperform prior art maximum likelihood models in classification and prediction tasks, and the models yield good results on many problems. In many cases, the resulting model is so close to the data-generating system that the model can be used for synthesis, e.g., as a motor controller for realistic human facial action, and for generating realistic 3D human body animation.

The invention uses an extension of the entropy minimization framework. The extension simultaneously minimizes cross-entropy *between* models, essentially maximizing their overlap and the congruence, i.e., similarity of support, between their hidden states. This means that the models "behave" similarly and their hidden states have similar "meanings."

In entropic estimation, the parameters that are estimated minimize a sum of entropies. Three basic entropies summarize the uncertainty associated with a hidden variable model. The method according to the invention considers estimating a family of models, and adds an entropy term that minimizes the spread of the family:

$$\theta^{(*)} = arg\min_{\theta} H(\omega) + D(\omega \| \theta) + H(\theta) + D(\theta^{(0)} \| \theta) + ... \quad [1]$$

where $\theta$ is a vector of model parameters, $\omega$ is a vector of expected sufficient statistics describing the training data vis-à-vis the model, $\theta^{(0)}$ parameterizes a generic reference model that also is learned. In equation 1, the terms $H(\cdot)$ are entropies, and the terms $D(\cdot)$ are cross-entropies.

Specifically, the first term expresses the entropy of the training data, and the second term the degree of misfit. Together, these two terms form the - *log likelihood*. The third term expresses the entropy of the generic model. The first three terms of this equation give a Bayesian posterior probability with an entropic prior probability distribution of $e^{-H(\theta)}$. The fourth term expresses the distance of a model from a generic model $\theta^{(0)}$.

Additional functions of. can extend the prior probability. For example, adding a term - $T \cdot H(\theta)$ gives deterministic annealing as described in greater detail below. While minimizing, annealing substantially ameliorates the problem of getting stuck in local optima in the energy (error) surface that characterizes the learning problem. Deterministic annealing effectively smoothes the energy surface, locates deep valleys that are likely to contain the global minimum, then gradually unsmooths the surface, making it possible to do a detailed search for than minimum. In entropy minimization, deterministic annealing forces the expectation-maximization (E-M) model-fitting process to explore the large-scale structure of the energy surface instead of converging to a nearest local optimum. Further adding a monotonic function on $T$, e.g., $T(e.g., +T^2/2.\ ^2)$ gives a prior probability on the annealing "temperature," leading to self-annealing parameter estimators. The prior probability $e^{-H(\theta)}$ asserts the belief that each model 113 should give a maximally concise and minimally uncertain explanation of the variation in the training data set 111. This increases the probability that the models will generalize well beyond the training set. This prior has an interesting effect on the Gaussian outputs of the SHMMs. The prior gradually removes dimensions of variation, because flattening a Gaussian is the most effective way to reduce its volume and therefore its entropy. This can be interpreted post-hoc as a belief that for each hidden state, the data should vary in just a few dimensions, that is, hidden states should identify relatively flat submanifolds of the data. The function of the prior probability

$$e^{-D(\theta^{(0)} \| \theta)}$$

is to keep the variation-specific models close and congruent to the generic model. Typically, this prior is assessed only on the output distributions, where the prior has the effect of keeping the variation-dependent outputs clustered tightly around the generic output. By constraining generic and variation-specific Gaussians to overlap, and constraining both to be narrow, the distribution of state-specific Gaussians across variation-specific models have a small number of degrees of freedom. Intuitively, if two Gaussians are narrow and overlap, then the Gaussians must be aligned in the directions of their narrowness, e.g., two overlapping disks in 3-dimension must be co-planar. The more dimensions in which the overlapping Gaussians are flat, the fewer degrees of freedom they have relative to each other. Consequently, after entropy minimization 110, all the variation between the variation-specific models can be describable with just a small number of parameters.

**Principle Component Analysis**

Step 120 determines those few degrees of freedom 122 by identifying a smooth, low-dimensional manifold that contains the parameterizations of all the variation-specific models. This can be done with any number of methods; a simple linear sub-space can usually provide a good low-dimensional parameterization of the dataset's stylistic degrees of freedom. This means that the stylistic degrees of freedom are roughly linearly independent, so that the principal degrees of freedom are revealed in this post-training eigen-decomposition of all vectors of the parameters of all models. For example, principle component analysis (PCA) of the parameters of the variation-specific models reveals that nearly all of the variation is concentrated on just a few eigenvectors. After discarding eigenvectors associated with zero or near-zero eigenvalues, the remaining principle eigenvectors are the intrinsic dimensions 122 of stylistic variation, i.e., stylistic degrees of freedom.

Therefore, the output of step 120 includes style coordinates 121, style degrees of freedom (DOF) 122, a specialization function 123, and the generic model 112. At this point the model for the dynamic system has been "learned."

It is now possible to perform simulations, or to synthesize variations of the system's behavior or operation.

**Generating Specialized Models and Synthesis**

Step 130 generates a specialized stylistic model (Sm) 131 from the output of step 120. The degrees of freedom of the styles are analogous to "control" knobs that can be used to "tune" the specialization function in step 130. The coordinates are the "settings" of the knobs to generate the specific stylistic model 131. The specialization function generates the new model by mapping the style-subspace coordinates specified by the "control" knobs back into full parameter space. In the case of PCA, one simply multiplies the style coordinates with the PCA eigenvectors, then adds the result to the parameters of the generic model. Step 140 generates a state sequence 141 by providing the generic model 112 with data 139. The data 139 can be any of the specific samples 111, or any other data of the family of bipedal locomotion. It is not necessarily that the data 139 be provided to the training step 110, the data 139 can come from other sources.

Step 150 synthesizes the desired bipedal locomotion 3 from the state sequence 141 and the specialized stylistic model 131. For example, if the data 111 includes walking, running, strolling, strutting, skipping, hopping, dancing, skating etc., etc., then it becomes possible to mimic a fashion model sashaying down the catwalk at an under four-minute mile pace.

**Expectation-Maximization**

Figure 2 shows the details of one embodiment of step 1 using expectation-maximization (E-M) process with annealing. Generally, E-M alternates between an expectation step and a maximization step. The expectation step assumes that the model is correct and finds the most likely description of the data with respect to the model. The maximization step assumes the description to be correct and maximizes the likelihood of the model with respect to the data. These two steps iterate until convergence 250, i.e., a fixpoint where nothing changes.

An E-Step 210 determines the expected sufficient statistics of each style set relative to its corresponding model. An E-Step 220 determines the expected sufficient statistics of each style set relative to the generic model using variation-specific emission parameters (Gaussians). A M-Step 230 determines the maximum *a posteriori* parameter values with the minimum-entropy prior, using the expectation step statistics from the entire training set. A M-Step 240 determines the maximum *a posteriori* parameter values with the combined minimum-entropy and minimum-cross-entropy prior, only using E-step statistics from the specific style set.

Note, if only the Gaussian parameters vary across styles, then it suffices just to do the second E-step 220. Initialization is optional because full annealing will negate the effects of any initialization. Conversely, if useful hints are encoded in the initial model, then the E-M loop should use partial annealing.

**Estimators**

In the pure entropy-minimization case, the estimator for the means, covariances, and multinomials are, respectively

$$\hat{\mu} = \frac{1}{N}\sum_{i}^{N} x_i \qquad\qquad [2]$$

$$\hat{K} = \frac{\sum_{i}^{N}(x_i - \hat{\mu})(x_i - \hat{\mu})^{\mathrm{T}}}{N + Z} \qquad\qquad [3]$$

$$\hat{\theta}_i = \frac{-\omega_i/Z}{W(-\omega_i e^{1+\lambda/Z}/Z)} \qquad [4]$$

$$\lambda = \frac{1}{N}\sum_i^N -\frac{\omega_i}{\theta_i} - Z \log\theta_i - Z \qquad [5]$$

where $x_i$ represents the training data or observations, $N$ the number of data points, $T$ represents time, the last two equations define a fixpoint, and a new parameter

$Z = 1 - T$ gives annealing as $T \downarrow 0$.

In the case of cross-entropy-minimization, the estimators are:

$$\hat{\mu} = \frac{(\sum_i^N x_i) + Z'\mu^{(0)}}{N + Z'} \qquad [6]$$

$$\hat{K} = \frac{\sum_i^N (x_i - \hat{\mu})(x_i - \hat{\mu})^T + Z'(\hat{\mu} - \mu^{(0)})(\hat{\mu} - \mu^{(0)})^T + Z'\hat{K}^{(0)}}{N + 2Z'} \qquad [7]$$

$$\hat{\theta}_i = \frac{(\omega_i + k_i^{(0)})/Z}{W((\omega_i + k_i^{(0)})e^{1+\lambda/Z}/Z)} \qquad [8]$$

$$\lambda = \frac{1}{N}\sum_i^N -\frac{(\omega_i + k_i^{(0)})}{\theta_i} - Z'\log\theta_i - Z' \qquad [9]$$

where $\mu^{(0)}, K^{(0)}, k_i^{(0)}$ are parameters or expected sufficient statistics from the generic model depending on whether the cross-entropy term is:

$$D(\theta^{(0)}\|\theta) \text{ or } D(\omega^{(0)}\|\theta).$$

In most cases, this reduces to a choice of how much to weight the generic and variation-specific data. The cross-entropy term can be modulated during annealing via any of the subscripted $Z_n$ terms. Note that priors involving cross-entropies have the same effect as adding virtual data.

**Annealing**

As stated above, training is done by annealing. An initial "temperature" $T = 1 - Z$ is set "high," and the temperature is gradually reduced until the heuristic "freezes" in a local optimum. This eliminates having to set initial conditions, and forces the estimators to explore the large-scale energy structure of the problem before committing to a particular region of parameter space.

In a high-temperature phase, the cross-entropy temperature $T' = 1 - Z'$ is set to zero, to force the variation-specific models to stay near the generic model. As the generic temperature declines, the cross-entropy temperature is slightly increased, allowing the variation-specific models to locate data not well explained by the generic model. Then, both temperatures are reduced to zero, and the estimators are allowed to converge to an entropy minimum. These temperature schedules are actually hints that guide the optimization process. The schedules first find global structures in the data, then off-load local variation to the specific models; once this division is stable learning goes on to simplify and compress the models as much as possible.

**Extraction of Latent Styles**

To discover latent styles, each variation-specific model is considered to be a point in a high-dimensional space, indexed by its parameters. A search is made for a low-dimensional manifold or subspace that contains all the models. In a preferred embodiment, a linear subspace is obtained via principal components analysis. This search is predicated on the assumption that the manifold of style variations is nearly linear in the area of the training data. This is plausible for means and covariances, which can combine linearly, but less appealing for multinomials, which are constrained to a small interval on the real number line. This can be resolved by mapping the probabilities to the full real number line, e.g., for an n-choice multinomial,

$$r_i = -\log((1/\theta_i - 1)/(n - 1)),$$

perform eigencoding and eigendecoding in this space, then inverting via

$$\theta_i = \sigma(r_i)/\sum_i^n \sigma(r_i)$$

where $\sigma(x) = (1 + (n - 1)e^{-x})^{-1}$.

**New Styles**

The PCA gives a subspace of models whose axes are intrinsic stylistic degrees of freedom spanned by the variations in the training set. These DOFs are often interpretable. For example, the two principal degrees of variation in a dataset of five human locomotion sequences can be classified as "posture" and "cockiness." It is possible to freely interpolate between any styles by varying $v$ between the coordinates of those styles in the style subspace. It is also possible to extrapolate by going outside the convex hull of the training styles. For example, it is possible to simulate a combination of strutting and running by synthesizing a model whose style coordinates are the sum of the style coordinates of strutting and running.

**Analysis**

Given novel data, it is possible to obtain their coordinates in the style manifold. A variation-specific model is chosen so that the likelihood of fit with the novel sample data is high. The specific model is then retrained with that novel data. Projection of the resulting parameters onto the style manifold gives the style coordinate 121.

**Synthesis**

Given a sample $y$ and a desired value of the style variable $v$, it is possible to resynthesize $y$ in the new style by sampling from:

$$p(y' | v, S(y)),$$

where $S(y)$ is the distribution over the hidden states of the model. For many models, it is possible to determine the maximum likelihood sample:

$$\arg\max_{y'} \; p(y' | v, S(y)).$$

Results

A set of bipedal locomotion time-series from a variety of sources were modeled using the techniques as described above. The training data included motion-capture sequences feature a variety of different kinds of motion, body types, and postures. An HMM was trained on a very low-dimensional representation of the data. Entropic estimation yielded a model which was essentially a phase-diagram of the locomotive cycle. This was used as an initialization for full SHMM training. The SHMM was lightly annealed, so it was not constrained to use this hint, but the final generic model did retain some of the information in the initialization. PCA of the resulting variation-specific models revealed that three stylistic degrees of freedom explained substantially all of the variation in the training sequences.

The most significant stylistic degree of freedom appears to be global pose, e.g., one tilts forward for running, back for funny-walking. It also contains information about the speed of motion. A second dimension appears to encode balance. Varying balance alters how far the feet are planted from the midline and the inclination of the plane in which the arms swing. A third style dimension can be characterized as the amount of swagger and energy in the motion. Increasing swagger yields sequences that look more and more high-spirited. Of course, any of these parameters can be varied to synthesize an appropriately styled motion sequence. In addition, it is possible to interpolate between any set of styles. More interesting, it is possible to extrapolate outside the hull of the training data and still obtain well-behaved motion. For example, it is possible to double the amount of swagger, or tilt a pose forward to form a slouching walk.

Analogies are a particularly interesting form of extrapolation. Given the analogical problem "*walking is to running as strutting is to X*", it is possible to solve for *X* in terms of the style coordinates *X*=strutting+ (running-walking), which is equivalent to completing the parallelogram having the style coordinates for walking, running, and strutting as three of its corners. The resulting synthesized sequence appears as a fast-advancing form of skanking, a rather high-energy pop dance style. Similarly, the analogy walking:running::cat-walking:X gives something that looks like how a model would skip down a catwalk in a fashion show.

## Stylistic Hidden Markov Models

Figure 3 illustrates a graphical model 300 of the stylistic hidden Markov models according to the invention. An observed signal, e.g., training data 111, $x_t$ 301 is explained by a vector-valued *style* variable *v* 115, and by a discrete-valued *state* variable $s(t)$ 302, which changes over time. Both *v* and $s(t)$ are hidden and must be inferred probabilistically. The nonlinear dynamics of the system are captured by a state transition function which forms the horizontal backbone of the model 300.

Arcs 310 emanating from the style variable *v* indicate conditional dependencies or linear variations between the variables. The arcs can take the form of parameterized functions. Described above are rules for inferring *v* and $s(t)$, learning all of the parameters associated with the conditional dependencies, and synthesis of novel but consistent behaviors, i.e., inferring a most likely *xt* for various styles and state sequences.

The model is specified by:

$$\theta = \{S, P_i, P_{i|j}, \mu_i, K_i, W_i, v\}$$

where $S = \{s_1, ..., s_N\}$ is a set of discrete states, a stochastic vector $P_i$ is the probability of a sequence beginning with *i* has probabilities $P_i$. A stochastic matrix $P_{i|j}$ gives the probability of transitioning from a state *j* to a state *i*. A mean vector is $\mu_i$, and $K_i, U_i, W_i$ respectively are a covariance matrix, and variation matrices. A variation vector *v* parameterize the multivariate Gaussian probability of observing the datapoint *xt* while in state *i*:

$$p(x_t|s_i)=N(x_t; \mu_i + U_i v, K_i+W_i v).$$

The likelihood of an observation sequence: $X = \{x_1,...,x_T\}$ is:

$$p(X|\theta) \propto \sum_S Ps_{(1)} p(x_1|s_{(1)}) \prod_{t=2}^{T} Ps_{(t)}|s_{(t-1)} p(x_t|s_{(t)})$$

where $s_{(t)} \in S$ selects a particular hidden state at frame *t*, and the sum is over all possible state sequences $\{s_{(1)},...,s_{(t)}\}$. In the case where *v* = 0, this simplifies to a standard discrete-state, Gaussian-output HMM. The case where *v = 0* is case the *generic* HMM 113.

Without user interaction, the present invention automatically learns all parameters including the structure of the model's transition function $P_{i|j}$ 123, the number of dimensions of stylistic variation *dim(v)* 122, and the value of *v* 121 for every variation of the training sequence. In addition, the model generalizes to a wide variety of graphical models.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

**1.** A method for modeling a system operating in a plurality of styles, comprising the steps of:

acquiring training data from the system while the system is operating in a plurality of styles;

determining a generic model of the system based on all of the training data;
determining a variation-specific model for the training data specific to each of the plurality of styles of operating the system;
determining style coordinates, styles degrees of freedom, and a specialization function from the generic model and the plurality of variation-specific models, the style coordinates, the styles degrees of freedom and the specialization function enabling generation of stylistically variable models from the generic model.

2. The method of claim 1 including the step of:

grouping the training data according to the plurality of styles.

3. The method of claim 1 wherein an essential structure of the generic model is qualitative, and structures of the variation-specific models are quantitative variations of the essential structure.

4. The method of claim 1 further comprising the step of:

minimizing entropies in a probabilistic model to determine the generic and variation-specific models.

5. The method of claim 4 wherein an objective function to be minimized is:

$$\theta^{(*)} = \arg\min_{\theta} H(\omega) + D(\omega\|\theta) + H(\theta) + D(\theta^{(0)}\|\theta)$$

where $\theta$ is a vector of model parameters, $\omega$ is a vector of expected sufficient statistics describing the training data with respect to the generic model, $\theta^{(0)}$ parameterizes the generic model, $H(\cdot)$ are entropies, and $D(\cdot)$ are cross-entropies.

6. The method of claim 5 wherein $H(\omega)$ expresses the entropy of the training data as estimated by the generic model, $D(\omega\|\theta)$ expresses the degree of misfit of the training data, $H(\theta)$ expresses an entropy of the generic model, and $D(\theta^{(0)}\|\theta)$ expresses the distance between a variation-specific model and the generic model.

7. The method of claim 5 further comprising the step of:

adding a term $- T \cdot H(\theta)$ to the objective function to enable deterministic annealing while minimizing the entropies.

8. The method of claim 7 further comprising:

adding a monotonic function of $T$ (e.g., $+T^2/2\sigma^2$) to the objective function to determine self-annealing parameters.

9. The method of claim 4 wherein the entropies are minimized by an expectation-maximization function.

10. The method of claim 9 further comprising the steps of:

determining expected sufficient statistics of the training data of each of the plurality of styles relative to the corresponding variation-specific model;
determining expected sufficient statistics of the training data of each of the plurality of styles relative to the generic model;
determining maximum a posteriori parameters using the sufficient statistics of the training data of each of the plurality of styles; and determining maximum a posteriori parameter using the sufficient statistics of the training data of each of the plurality of styles.

11. The method of claim 1 wherein determining the style coordinates, styles degrees of freedom, and a specialization function further comprises the steps of:

identifying a low-dimensional manifold that includes parameterizations of all the variation-specific models.

**12.** The method of claim 11 applying principle component analysis on all parameters of all the variation-specific models to identify principle eigenvectors, and discarding zero or near-zero eigenvectors.

**13.** The method of claim 11 further comprising the steps of:

applying to the specialization function;
applying the specialization function and particular style coordinates in style space (stylistic degrees of freedom) to the generic model to generate a specialized stylistic model;
applying special data to the generic model to generate a distribution over the hidden states; and
applying the hidden state distribution to the specialized stylistic model to generate simulated data according to special style for operating the system.

**14.** The method of claim 1 wherein the system is a person performing bipedal locomotion, and camera is used to record images of the person performing the bipedal locomotion according the plurality of styles.

**15.** An apparatus for modeling a dynamic system operating in a variety of styles, comprising the steps of:

means for measuring training data of the system while operating in a plurality of styles;
means for determining a generic model of the system based on all of the training data;
means for determining a variation-specific model for the training data of each of the plurality of styles; and
means for determining style coordinates, styles degrees of freedom, and a specialization function from the generic model and the plurality of variation-specific models.

FIG. 1

EP 1 096 389 A2

FIG. 2

FIG. 3

300